# EUROPÄISCHE PATENTANMELDUNG

(11) **EP 2 037 223 A2**
(43) Veröffentlichungstag der Anmeldung: **18.03.2009**
(21) Anmeldenummer: 08163726.6
(22) Anmeldetag: 05.09.2008
(51) Int. Cl.: G01D 5/245

(54) **Vorrichtung zur Ermittlung einer Neutrallage zweier Bauteile**

(30) Priorität: 13.09.2007 DE 102007043589
(71) Anmelder: ZF Friedrichshafen AG, 88038 Friedrichshafen (DE)
(72) Erfinder: Mair, Ulrich, 88046, Friedrichshafen (DE); Ketteler, Karl-Hermann, 88677, Markdorf (DE); Gessler, Frank, 88287, Grünkraut (DE)

(57) **Zusammenfassung**

Vorrichtung zur Ermittlung einer Neutrallage zweier relativ zueinander beweglicher Bauteile (1, 2) bestehend aus einer Verstellungseinrichtung zur Bewegung der Bauteile (1, 2) in eine beliebige Relativlage und einem Lagesensor (9) zur Ermittlung der Relativlage, sowie einer an dem ersten Bauteil (1) befindlichen Wegmarkierung (6) und einem an dem zweiten Bauteil (2) befindlichen Markierungssensor (8), welcher die Wegmarkierung (6) in einem Erfassungsbereich (7) erkennen kann, dadurch gekennzeichnet, dass die Bauteile (1, 2) in der Neutrallage derart zueinander ausgerichtet sind, dass die Wegmarkierung (6) außerhalb des Erfassungsbereichs (7) des Markierungssensors (8) angeordnet ist, wobei der Abstand (10) zwischen dem Erfassungsbereich (7) und der Wegmarkierung (6) bekannt ist und die Vorrichtung eine mit dem Markierungssensor (8) und dem Lagesensor (9) verbundene Datenverarbeitungsanlage beinhaltet, welche bei der Erkennung der Wegmarkierung (6) durch den Markierungssensor (8) mit der von dem Lagesensor (9) ermittelten Relativlage und mit dem bekannten Abstand (10) zwischen dem Erfassungsbereich (7) des Markierungssensors (8) und der Wegmarkierung (6) die Neutrallage ermittelt.

## Beschreibung

Die vorliegende Erfindung betrifft eine Vorrichtung und ein Verfahren zur Ermittlung einer Neutrallage zweier relativ zueinander beweglicher Bauteile gemäß den Merkmalen des Oberbegriffes der jeweiligen Patentansprüche.

In der Automobilindustrie werden zur definierten Bewegung einer Vielzahl von Systemen elektrisch, hydraulisch oder pneumatisch arbeitende Aktor eingesetzt, beispielsweise zur Sicherung der Türen bei Zentralverriegelungen oder zur Einstellung der Motorleistung bei Geschwindigkeitsregelanlagen. Dabei ist es meist notwendig, dass die Aktoren definierte Positionen einnehmen und aus diesen heraus definierte Bewegungen durchführen, wozu sie mit Lagesensoren, wie Weg- oder Winkelgebern, sowie Festanschlägen oder Wegmarkierungen ausgestattet sind. Sie weisen zudem in der Regel Übersetzungsglieder, wie Hebel oder Getriebe auf, da die eingesetzten Motoren durch die geringe Bordspannung und die eingeschränkte Stromstärke nur geringe Drehmomente oder Kräfte aufbringen können. Hierbei sind die Lagesensoren vorzugsweise an der Antriebsseite der Übersetzungsglieder oder direkt an den Motoren angebracht, wodurch selbst bei einer kleinen Stellbewegungen der Aktoren, die an den Lagesensor zurückgelegte Strecke ausreichend groß ist, um eine genaue Lageermittlung zu gewährleisten. Die Wegmarkierungen oder die Festanschläge befinden sich dagegen meist an der Abtriebsseite des Übersetzungsgliedes, damit sie der Aktor innerhalb seines Bewegungsspielraumes direkt anfahren kann. Zur Messung stehen Inkremental- oder Absolutgeber zur Verfügung, wobei letztere auf Grund des einfacheren Aufbaus bevorzugt eingesetzt werden.

Da Inkrementalgebern nach einem Ausfall oder Abschalten der Versorgungsenergie die absolute Aktorposition nicht mehr bekannt ist und sowohl Inkremental- als auch Absolutgeber unter Umständen keine dynamischen oder statischen Einflüsse auf das Übersetzungsglied erkennen können, ist ein Abgleich des Lagesensors auf eine festen Wegmarkierung notwendig. Hierzu fährt der Aktor eine Wegmarkierung bekannter Position an, erkennt sie mittels eines Markierungssensors und referenziert anschließend den Lagesensor auf die Position der Wegmarkierung. Dabei ist es wichtig, dass der Markierungssensor die Wegmarke möglichst genau an ihrer exakten Position erkennt, weshalb der Erfassungsbereich des Markierungssensors möglichst klein und exakt ausgerichtet sein muss.

Die DE 10 2004 057 341 A1 beschreibt eine Einrichtung zum Abgleich eines Aktors in einem elektromechanisch verstellbaren Fahrzeugstabilisator mittels einer festen Wegmarkierung. Der Aktor besteht im Wesentlichen aus zwei aktiv gegeneinander verdrehbaren Bauteilen und einem Winkelgeber, sowie einer an dem ersten Bauteil befindlichen Wegmarkierung und einem an dem zweiten Bauteil befindlichen Markierungssensor. Dabei sind der Markierungssensor und die Wegmarkierung in der Neutrallage der Bauteile, d.h. die Lage, um welche sie sich während des Betriebs gleichmäßig gegeneinander verdrehen, derart zueinander ausgerichtet, dass sich die Wegmarkierung genau mittig innerhalb des Erfassungsbereiches des Markierungssensors befindet. Da die exakte Lage der Wegmarkierung innerhalb des Erfassungsbereiches jedoch nicht genau bestimmt werden kann, werden die beiden Bauteile unmittelbar nach der Inbetriebnahme derart gegeneinander verdreht, dass der Markierungssensor die Wegmarkierung von beiden Drehrichtungen her anfährt, wobei der Winkelgeber jeweils bei der Erkennung der Wegmarkierung die aktuelle Position der Bauteile erfasst. Aus den beiden Positionen wird anschließend eine Mittelwertsposition ermittelt, von welcher angenommen wird, dass sie die Neutrallage bildet, woraufhin der Lagesensor auf diese Position abgeglichen werden kann.

Im Stand der Technik wird davon ausgegangen, dass sich die Wegmarkierung in der Neutrallage exakt mittig in dem Erfassungsbereich des Markierungssensors befindet und dass der Erfassungsbereich des Markierungssensors symmetrisch ausgebildet ist. Hierdurch müssen die gegeneinander verdrehbaren Bauteile, der Markierungssensor und der Winkelgeber sehr hohen qualitativen Anforderungen genügen und sehr exakt zueinander ausgerichtet sein.

Der Erfindung liegt daher die Aufgabe zu Grunde eine Vorrichtung und ein Verfahren zu schaffen, womit die Position der Neutrallage eines Aktors, vorzugsweise eines Aktors zur Einstellung eines verstellbaren Fahrzeugstabilisators, möglichst genau ermittelt werden kann, ohne dass die Vorrichtungskomponenten sehr hohen Qualitätsanforderungen genügen müssen.

Sie wird gemäß der Erfindung durch die Merkmale der unabhängigen Ansprüche gelöst. Weitere Ausgestaltungen ergeben sich aus den Unteransprüchen.
Danach besteht eine Vorrichtung zur Ermittlung einer Neutrallage zweier gegeneinander beweglicher Bauteile, aus einer Verstellungseinrichtung zur Bewegung der Bauteile in eine beliebige Relativlage und einem Lagesensor zur Erkennung der Relativlagen, sowie einer an dem ersten Bauteil befindlichen Wegmarkierung und einem an dem zweiten Bauteil befindlichen Markierungssensor, welcher die Wegmarkierung in einem Erfassungsbereich erkennt. Die Neutrallage entspricht dabei der Position der Bauteile, um welche sie sich während des Betriebs gleichmäßig bewegen. Kennzeichnend für die Erfindung ist, dass der Erfassungsbereich des Markierungssensors und die Wegmarkierung in der Neutrallage derart zueinander ausgerichtet sind, dass sich die Wegmarkierung in einem bekannten Abstand außerhalb des Erfassungsbereichs befindet und eine Datenverarbeitungsanlage mit dem Markierungssensor und dem Lagesensor verbunden ist, welche einer vom Lagesensor erkannten Relativlage den bekannten Abstand zwischen dem Erfassungsbereich des Markierungssensors und der Wegmarkierung hinzurechen kann. Dabei ist der Abstand so bemessen, dass während des Betriebs die Wegmarkierung den Markierungssensor möglichst häufig passiert und durch diesen erkannt wird, wobei der Abstand vor dem Einbau der Vorrichtung in ihre endgültige Einbauposition, beispielsweise in einem Prüfstand ermittelt und später in der Datenverarbeitungsanlage dauerhaft abgespeichert werden kann.

In einer vorteilhaften Ausgestaltung der Erfindung bilden die beiden Bauteile jeweils eine Hälfte eines mittels eines Aktors verstellbaren Fahrzeugstabilisators, welche in der Neutrallage die Funktion eines starren Lenkers haben, oder die beiden Bauteile sind Bestandteil eines Aktors zur Verstellung der Raddrehebene eines Fahrzeugs.

Von besonderem Vorteil sind Sensoren, welche die Wegmarkierung oder die Relativlage der Bauteile berührungslos mittels magnetischer, elektrische oder optischer Effekte erkennen, beispielsweise mittels einer Lichtschranke oder eines Hall-Sensors.

In einer Ausgestaltung der Erfindung wird die Wegmarkierung durch einen Übergang zwischen zwei in Bewegungsrichtung hintereinander angeordneten Markierungsbereichen gebildet, wobei der Markierungssensor innerhalb des Erfassungsbereichs die Markierungsbereiche erkennen und unterscheiden kann. Vorteilhaft ist es dabei, wenn die Markierungsbereiche zwei unterschiedlich hohe Ebenen bilden und die Wegmarkierung aus einer senkrecht zur Bewegungsrichtung verlaufenden Stufe zwischen den Ebenen besteht.

In einer vorteilhaften Ausgestaltung der Erfindung sind die beiden Bauteile koaxial angeordnet und um die Längsachse verdrehbar oder entlang der Längsachse verschiebbar gestaltet, wobei die Wegmarkierung auf dem inneren Bauteil und der Markierungssensor auf dem äußeren Bauteil angebracht sind. Hierbei sind keine verdrehbaren oder verschiebbaren Verbindungsleitungen zu dem Markierungssensor notwenig. Die erfindungsgemäße Vorrichtung kann somit auch zur Erkennung der Neutrallage von Spurstangen in Fahrzeuglenkungen oder von Schubstangen in Fahrzeuggetrieben eingesetzt werden.

Eine weitere sehr vorteilhafte Ausgestaltung der Erfindung sieht einen Datenspeicher vor, welche während des Betriebs mehrere von dem Lagesensor oder der Datenverarbeitungsanlage ermittelten Relativlagen oder Neutrallagen speichern kann. Mittels des Datenspeichers ist es der Datenverarbeitungsanlage daher möglich eine Durchschnittsneutrallage zu ermitteln, welche deutlich näher an der tatsächlichen Neutrallage liegt, als eine stark von den Erkennungstoleranzen des Lage- und Markierungssensors abhängige einmalige Ermittlung der Neutrallage.

Die vorliegende Aufgabe wird auch bezüglich eines Verfahrens gemäß den Merkmalen des unabhängigen Anspruches 7 gelöst.
Demnach ermittelt der Lagesensor bei der Erkennung der Wegmarkierung durch den Markierungssensors die Relativlage der Bauteile zueinander und die Datenverarbeitungsanlage errechnet mit dieser und dem bekannten Abstand zwischen dem Erfassungsbereich des Markierungssensors und der Wegmarkierung anschließend die Neutrallage der Bauteile.

Während des Betriebs der erfindungsgemäßen Vorrichtung, beispielsweise bei dem Einsatz der Vorrichtung in einem aktiv verstellbaren elektromagnetischen Fahrzeugstabilisator, werden die Bauteile der Vorrichtung durch die Verstelleinrichtung oder äußere Einflüsse häufig relativ zueinander um die Neutrallage bewegt, wodurch die Wegmarkierung den Markierungssensor oft passiert. In einem besonders vorteilhaften erfindungsgemäßen Verfahren, speichert hierbei ein Datenspeicher bei jeder Erkennung der Wegmarkierung durch den Markierungssensor die zu diesem Zeitpunkt vorliegende Relativlage der Bauteile. Die Datenverarbeitungsanlage errechnet anschließend aus sämtlichen abgespeicherten Relativlagen eine wesentlich genauere Durchschnittsrelativlage, aus welcher sie wiederum mit Hilfe des bekannten Abstandes zwischen dem Erfassungsbereich des Markierungssensors und der Wegmarkierung die Neutrallage ermittelt. Alternativ kann die Datenverarbeitungsanlage auch bei jeder Erkennung der Wegmarkierung zuerst mit der durch den Lagesensor ermittelten Relativlage die Neutrallage ermitteln, welche in dem Datenspeicher gespeichert werden und aus welchen die Datenverarbeitungsanlage bei jedem Speichervorgang eine neue Durchschnittsneutrallage errechnet. Da dies während des laufenden Betriebs der Vorrichtung geschieht, wird die Durchschnittsneutrallage laufend aktualisiert und durch die statistische Mittelung an die tatsächliche Neutrallage sehr genau angenähert. Als Mittelwert kann beispielsweise der arithmetische Mittelwert oder der Modalwert berechnet werden. Erfindungsgemäß kann der Datenspeicher sowohl einen flüchtigen, als auch einen nicht-flüchtigen Speicher aufweisen.

Falls nach der Inbetriebnahme der erfindungsgemäßen Vorrichtung noch keine durch die Datenverarbeitungsanlage ermittelte Neutrallage vorliegt, sieht eine weitere Ausgestaltung der Erfindung vor, die Bauteile so lange mittels der Verstellungseinrichtung in eine beliebige Richtung gegeneinander zu verdrehen, bis der Markierungssensor die Wegmarkierung erkennt. Anschließend ermittelt die Datenverarbeitungsanlage die Neutrallage mit der durch den Lagesensor hierbei ermittelten Relativlage der Bauteile und dem bekannten Abstand zwischen der Wegmarkierung und dem Erfassungsbereich des Markierungssensors. In einer Weiterbildung hiervon wird die Wegmarkierung durch den Übergang zwischen den zwei in Bewegungsrichtung hintereinander angeordneten Markierungsbereichen gebildet. Dies ermöglich es, von dem momentan vom Markierungssensor erkannten Markierungsbereich auf die Bewegungsrichtung zu schließen, in welche die beiden Bauteile gegeneinander bewegt werden müssen, damit die Wegmarkierung den Markierungssensor passiert.

Im Folgenden wird die Erfindung anhand von Beispielen und Zeichnungen näher erläutert, aus welchen weitere vorteilhafte Ausgestaltungen der Erfindung entnommen werden können.

Jeweils in schematischer Darstellung zeigen:

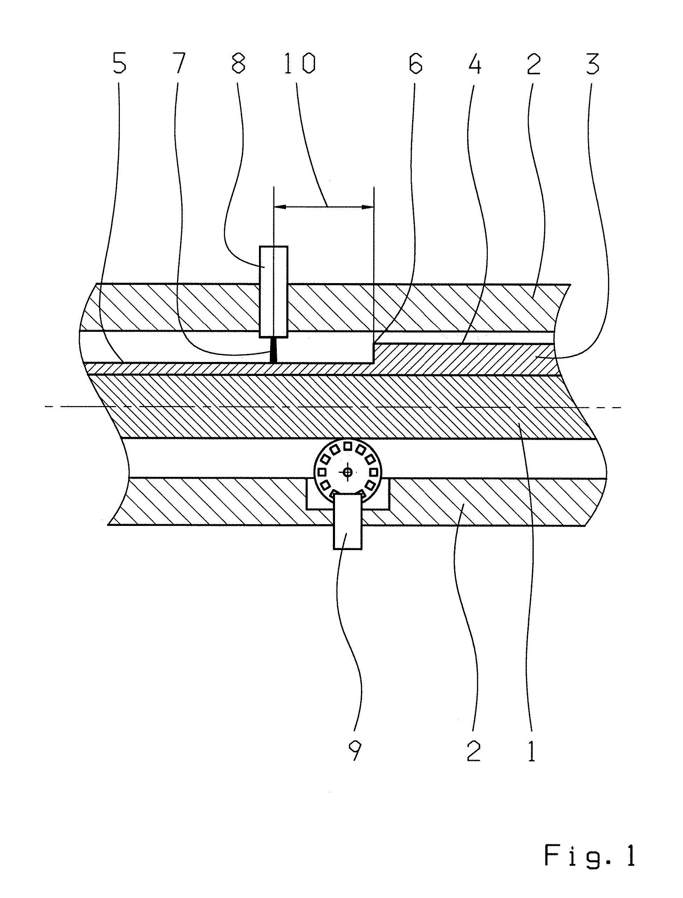

- Fig. 1: zwei koaxial ausgerichtete und in Längsrichtung gegeneinander verschiebbare Bauteile in Neutrallage, wobei ein Lagesensor die verschobene Strecke ermittelt und an dem ersten Bauteil eine stufenförmige Wegmarkierung angebracht ist, welche von einem am zweiten Bauteil befindlichen Markierungssensor erkannt werden kann und

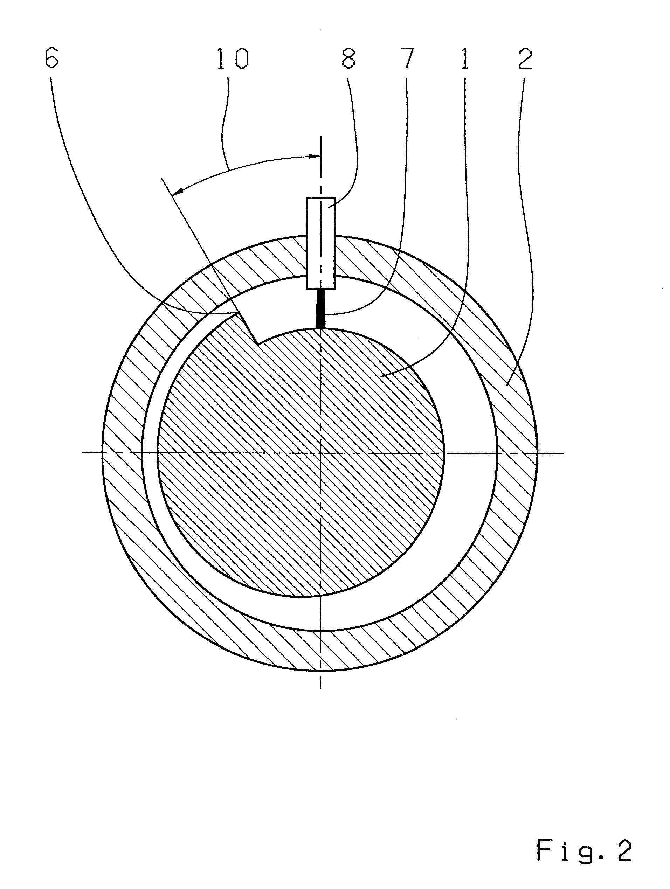

- Fig. 2: zwei koaxial ausgerichtete und gegeneinander verdrehbare Bauteile in Neutrallage, wobei ein Lagesensor den Verdrehwinkel ermittelt und an dem ersten Bauteil im Umfang eine stufenförmige Wegmarkierung angebracht ist, welche von einem am zweiten Bauteil befindlichen Markierungssensor erkannt werden kann.

In Fig. 1 ist die erfindungsgemäße Vorrichtung in der Neutrallage dargestellt. Hierbei ist das erste Bauteil 1 in dem zweiten Bauteil 2 koaxial und in Längsrichtung beweglich angeordnet, wobei an dem ersten Bauteil 1 eine Markierungsleiste 3 ortsfest angebracht ist, welche in Markierungsbereiche 4, 5 unterschiedlicher Höhe eingeteilt ist. Dabei bildet der senkrecht zur Bewegungsrichtung abgestufte Übergang zwischen den Markierungsbereichen 4, 5 die Wegmarkierung 6. In der gezeigten Neutralposition der Bauteile befindet sich der Erfassungsbereich 7 des im zweiten Bauteil 2 ortsfest angebrachten Markierungssensors 8 um den bekannten Abstand 10 von der Wegmarkierung 6 entfernt. Durch die unterschiedlichen Ausprägung der Markierungsbereichen 4, 5, welche der Markierungssensors 8 erkennen und unterscheiden kann, ist die Bewegungsrichtung bekannt, in welcher die nicht dargestellt Verstellungseinrichtung die Bauteile 1, 2 zueinander verschieben muss, damit nach der Inbetriebnahme der erfindungsgemäßen Vorrichtung die Wegmarkierung 6 den Markierungssensor 8 passiert. In dem gezeigten Beispiel erkennt der Markierungssensor 8 den zwischen dem ersten Markierungsbereich 5 und dem zweiten Bauteil 2 befindlichen breiten Spalt, wodurch bekannt ist, dass das erste Bauteil 1 in Richtung der linken Seite des zweiten Bauteils 2 verschoben werden muss, damit die Wegmarkierung 6 den Markierungssensor 8 passiert. Der als Inkrementalgeber ausgebildete Lagesensor 9 erfasst dabei die zwischen den Bauteilen 1, 2 zurückgelegte Wegstrecke. Der Lagesensor 9 und der Markierungssensor 8 sind mit der nicht dargestellten Datenverarbeitungsanlage gekoppelt, welche mit der vom Lagesensor 9 ermittelten Relativlage und dem bekannten Abstand 10 zwischen dem Erfassungsbereichs 7 und der Wegmarkierung 6 die Neutrallage errechnen kann. Vorzugsweise weist die Datenverarbeitungsanlage einen Datenspeicher auf, welcher bei der Erkennung der Wegmarkierung 6 die vom Lagesensor 9 ermittelten Relativlagen speichert und aus welchen die Datenverarbeitungsanlage eine Durchschnittslage ermitteln kann.

Erfindungsgemäß kann die Vorrichtung mittels des im Folgenden erläuterten Verfahrens die Neutrallage der beiden Bauteile ermitteln:
Vor der ersten Inbetriebnahme der erfindungsgemäßen Vorrichtung ist es notwendig, den Abstand 10 zwischen dem Erfassungsbereichs 7 des Markierungssensors 8 und der Wegmarkierung 6 zu bestimmen, wozu beispielsweise die Bauteile 1, 2 mehrmals in einem Prüfstand in einer Weise gegeneinander bewegt werden, dass die Wegmarkierung 6 den Markierungssensor 8 aus unterschiedlichen Bewegungsrichtungen passiert und von diesem erkannt wird. Hierbei ermittelt der Lagesensor 9, jeweils von der Neutrallage ausgehend, die bis zur der Erkennung der Wegmarkierung 6 durchgeführten Lageänderungen der Bauteile, welche zu einer Durchschnittslageänderung zusammengefasst werden. Diese wird anschließend als fester Abstand 10 zwischen dem Erfassungsbereich 7 des Markierungssensors 8 und der Wegmarkierung 6 betrachtet und in der Datenverarbeitungsanlage zur zukünftigen Ermittlung der Neutrallage gespeichert.

Nach der Positionierung der erfindungsgemäßen Vorrichtung in ihrer endgültigen Einbaulage, bzw. nach jeder Inbetriebnahme wurde noch keine Neutrallage durch die Datenverarbeitungsanlage ermittelt, d.h. es steht zwar der vorher ermittelte Abstand 10 zwischen dem Erfassungsbereichs 7 des Markierungssensors 8 und der Wegmarkierung 6 fest, welche Position die Bauteile 1, 2 momentan zueinander einnehmen und wo sich ihre Neutrallage befindet, ist jedoch unbekannt. Daher veranlasst die Datenverarbeitungsanlage die Verstellungseinrichtung, die Bauteile 1, 2 derart zu verschieben, dass die Wegmarkierung 6 den Markierungssensors 8 passiert, wobei die Bewegungsrichtung von dem im Erfassungsbereich 7 erkannten Markierungsbereiche 4, 5 abhängig ist. Sobald der Markierungssensor 8 die Wegmarkierung 6 erkennt, errechnet die Datenverarbeitungsanlage mit der vom Lagesensor 9 zu diesem Zeitpunkt ermittelten Relativlage der Bauteile 1, 2 und dem bekannten Abstand 10 die Neutrallage. Vorzugsweise erfolgt anschließend ein Abgleich des Lagesensors 9 auf die Neutrallage, woraufhin dieser als Absolutgeber eingesetzt werden kann.

Im laufenden Betrieb werden die Bauteile 1, 2 durch äußere Einflüsse oder die Verstelleinrichtung fortwährend um die Neutrallage relativ zueinander bewegt. Da der Abstand 10 zwischen dem Erfassungsbereichs 7 des Markierungssensors 8 und der Wegmarkierung 6 sehr klein ausgelegt ist, passiert diese den Markierungssensor 8 häufig und der Datenspeicher speichert bei jeder Erkennung der Wegmarkierung 6 die hierbei vom Lagesensor 9 ermittelte Relativlage ab. Bei jedem erneuten Speichervorgang ermittelt die Datenverarbeitungsanlage aus allen abgespeicherten Relativlagen eine aktualisierte Durchschnittsrelativlage, aus welcher sie anschließend unter Einbeziehung des bekannten Abstandes 10 eine genauere Neutrallage ermittelt. Vorzugsweise findet daraufhin ein erneuter Abgleich des Lagesensors 9 an die genauere Neutrallage statt.
Da eine sehr genaue Ermittlung des Abstandes 10 zwischen dem Erfassungsbereichs 7 des Markierungssensors 8 und der Wegmarkierung 6 vor der Inbetriebnahme beispielsweise auf einem Prüfstand möglich ist und während des Betriebs die Position der Wegmarkierung 6 über die statistische Mittelung der ermittelten Relativlagen genau bestimmt werden kann, können die Lagetoleranzen zwischen der Wegmarkierung 6 und dem Markierungssensor 8, sowie der Erfassungsbereich 7 des Markierungssensors 8 erweitert werden, was die Produktion der Vorrichtung einfacher und kostengünstiger gestaltet. Darüber hinaus muss der Erfassungsbereich des Markierungssensors nicht zwangsläufig symmetrisch sein.

Fig. 2 zeigt eine weitere Ausgestaltung der Erfindung, wobei das erste Bauteil 1 koaxial und um die Längsachse verdrehbar in dem zweiten Bauteil 2 angeordnet ist und sich ein Spalt zwischen den Bauteilen 1, 2 befindet. In der dargestellten Neutrallage ist der Erfassungsbereich 7 des Markierungssensors 8 um den bekannten Winkel 10 von der als senkrecht zur Drehrichtung stufenförmig ausgebildeten Wegmarkierung 6 entfernt, wobei der Verdrehwinkel durch einen nicht abgebildeten Winkelgeber als Lagesensor ermittelt wird. Ebenfalls nicht abgebildet ist die Verstelleinrichtung, welche die Verdrehung der Bauteile erwirkt. Der Markierungssensor 8 gibt während der Drehung ein der Spaltbreite analoges Ausgangssignal aus, welches mittels der Datenverarbeitungsanlage auf Sprünge untersucht wird. Diese treten immer dann auf, wenn der Erfassungsbereich 7 des Markierungssensors 8 die Wegmarkierung 6 passiert. Um die Neutrallage bei einer Verdrehung der Bauteile 1, 2 um mehr als 360° sicher feststellen zu können, ist es zweckmäßig den Lagesensor mit einer Zähleinrichtung zu versehen oder den Lagesensor als Multi-Turn-Geber auszuführen. Ebenso kann es zweckmäßig sein, den Umfang des ersten Bauteils 1, analog zu dem in Fig. 1 aufgezeigten Beispiel in zwei getrennte Markierungsbereiche einzuteilen, wodurch die Drehrichtung festgestellt werden kann, um welche die Bauteile 1, 2 nach der Inbetriebnahme zur Erkennung der Wegmarkierung 6 gedreht werden müssen. Während des Betriebs ist dann jedoch lediglich ein maximaler Verdrehwinkel von weniger als 180° sinnvoll.

### Bezugszeichen

- 1: Bauteil
- 2: Bauteil
- 3: Markierungsleiste
- 4: Markierungsbereich
- 5: Markierungsbereich
- 6: Wegmarkierung
- 7: Erfassungsbereich
- 8: Markierungssensor
- 9: Lagesensor
- 10: Abstand zwischen dem Erfassungsbereich 7 des Markierungssensors 8 und der Wegmarkierung 6 in der Neutrallage der Bauteile 1, 2

## Patentansprüche

1. Vorrichtung zur Ermittlung einer Neutrallage zweier relativ zueinander beweglicher Bauteile (1, 2), insbesondere den Hälften eines mittels eines Aktors verstellbaren Fahrzeugstabilisators, welche in der Neutrallage die Funktion eines starren Lenkers haben, bestehend aus einer Verstellungseinrichtung zur Bewegung der Bauteile (1, 2) in eine beliebige Relativlage und einem Lagesensor (9) zur Ermittlung der Relativlage, sowie einer an dem ersten Bauteil (1) befindlichen Wegmarkierung (6) und einem an dem zweiten Bauteil (2) befindlichen Markierungssensor (8), welcher die Wegmarkierung (6) in einem Erfassungsbereich (7) erkennen kann, **dadurch gekennzeichnet, dass** die Bauteile (1, 2) in der Neutrallage derart zueinander ausgerichtet sind, dass die Wegmarkierung (6) außerhalb des Erfassungsbereichs (7) des Markierungssensors (8) angeordnet ist, wobei der Abstand (10) zwischen dem Erfassungsbereich (7) und der Wegmarkierung (6) bekannt ist und die Vorrichtung eine mit dem Markierungssensor (8) und dem Lagesensor (9) verbundene Datenverarbeitungsanlage beinhaltet, welche bei der Erkennung der Wegmarkierung (6) durch den Markierungssensor (8) mit der von dem Lagesensor (9) ermittelten Relativlage und mit dem bekannten Abstand (10) zwischen dem Erfassungsbereich (7) des Markierungssensors (8) und der Wegmarkierung (6) die Neutrallage ermittelt.

2. Vorrichtung zur Ermittlung einer Neutrallage zweier relativ zueinander beweglicher Bauteile (1, 2) nach Anspruch 1, **dadurch gekennzeichnet, dass** die Wegmarkierung (6) aus dem Übergang zweier in Bewegungsrichtung der Bauteile (1, 2) hintereinander angeordneter Markierungsbereiche (4, 5) gebildet wird und der Markierungssensor (8) in dem Erfassungsbereich (7) die Markierungsbereiche (4, 5) erkennen und voneinander unterscheiden kann.

3. Vorrichtung zur Ermittlung einer Neutrallage zweier relativ zueinander beweglicher Bauteile (1, 2) nach Anspruch 2, **dadurch gekennzeichnet, dass** die Markierungsbereiche (4, 5) aus zwei unterschiedlich hohen Ebenen bestehen und die Wegmarkierung (6) eine in Bewegungsrichtung senkrechte Stufe zwischen den Ebenen bildet.

4. Vorrichtung zur Ermittlung einer Neutrallage zweier relativ zueinander beweglicher Bauteile (1, 2) nach Anspruch 2, **dadurch gekennzeichnet, dass** der Markierungssensor (8) derart mit der Verstellungseinrichtung gekoppelt ist, dass diese die beiden Bauteile (1, 2) in Abhängigkeit des momentan erkannten Markierungsbereiches (4, 5) in eine vorgegebenen Richtung gegeneinander bewegen kann.

5. Vorrichtung zur Ermittlung einer Neutrallage zweier relativ zueinander beweglicher Bauteile (1, 2) nach Anspruch 1, **dadurch gekennzeichnet, dass** der Markierungssensors (8) die Wegmarkierung (6) auf Basis optischer, elektrischer, oder magnetischer Effekte erkennen kann.

6. Vorrichtung zur Ermittlung einer Neutrallage zweier relativ zueinander beweglicher Bauteile (1, 2) nach Anspruch 1, **dadurch gekennzeichnet, dass** die beiden Bauteile (1, 2) koaxial zueinander angeordnet und gegeneinander verdrehbar oder verschiebbar sind.

7. Vorrichtung zur Ermittlung einer Neutrallage zweier relativ zueinander beweglicher Bauteile (1, 2) nach Anspruch 1, **dadurch gekennzeichnet, dass** die Datenverarbeitungsanlage einen Datenspeicher aufweist, welcher bei jeder Erkennung der Wegmarkierung (6), die von dem Lagesensor (9) ermittelte Relativlage oder die von der Datenverarbeitungsanlage errechnete Neutrallage speichern kann und die Datenverarbeitungsanlage aus den gespeicherten Lagen eine Durchschnittslage berechnen kann.

8. Verfahren zur Ermittlung einer Neutrallage zweier relativ zueinander beweglicher Bauteile (1, 2) mit der Vorrichtung nach Anspruch 1, **dadurch gekennzeichnet, dass** bei jeder Erkennung der Wegmarkierung durch den Markierungssensor, die Datenverarbeitungsanlage mit der von dem Lagesensor (9) erkannten Relativlage und dem bekannten Abstand (10) zwischen dem Erfassungsbereich (7) des Markierungssensors (8) und der Wegmarkierung (6) die Neutrallage ermittelt.

9. Verfahren zur Ermittlung einer Neutrallage zweier relativ zueinander beweglicher Bauteile (1, 2) nach Anspruch 8 und der Vorrichtung nach Anspruch 7, **dadurch gekennzeichnet, dass** jede durch die Datenverarbeitungsanlage ermittelte Neutrallage in dem Datenspeicher gespeichert wird und aus den gespeicherten Neutrallagen die Datenverarbeitungsanlage eine Durchschnittsneutrallage ermittelt.

10. Verfahren zur Ermittlung einer Neutrallage zweier relativ zueinander beweglicher Bauteile (1, 2) nach Anspruch 8 und der Vorrichtung nach Anspruch 7, **dadurch gekennzeichnet, dass** der Datenspeicher bei jeder Erkennung der Wegmarkierung (6) durch den Markierungssensor (8), die von dem Lagesensor (9) erkannte Relativlage speichert und die Datenverarbeitungsanlage aus den gespeicherten Relativlagen eine Durchschnittsrelativlage ermittelt und mit der Durchschnittsrelativlage und dem bekannten Abstand (10) zwischen dem Erfassungsbereich (7) des Markierungssensors (8) und der Wegmarkierung (6) die Neutrallage ermittelt.

11. Verfahren zur Ermittlung einer Neutrallage zweier relativ zueinander beweglicher Bauteile (1, 2) nach Anspruch 8 und der Vorrichtung nach Anspruch 1, **dadurch gekennzeichnet, dass** die Verstellungseinrichtung, vorzugsweise nach jeder Inbetriebnahme der Vorrrichtung, die Bauteile (1, 2) so lange in eine Bewegungsrichtung gegeneinander bewegt, bis die Wegmarkierung durch den Markierungssensor (8) erkannt wird.

12. Verfahren zur Ermittlung einer Neutrallage zweier relativ zueinander beweglicher Bauteile (1, 2) nach Anspruch 11 und der Vorrichtung nach Anspruch 4, **dadurch gekennzeichnet, dass** die Bewegungsrichtung, in welcher die Verstellungseinrichtung die Bauteile (1, 2) gegeneinander bewegt, von dem durch den Markierungssensor (8) erkannten Markierungsbereich (4, 5) abhängig ist.
